(19)

**Europäisches Patentamt**
**European Patent Office**
**Office européen des brevets**

(11) **EP 4 380 039 B1**

(12) **EUROPEAN PATENT SPECIFICATION**

(45) Date of publication and mention
of the grant of the patent:
**13.05.2026 Bulletin 2026/20**

(21) Application number: **22847404.5**

(22) Date of filing: **23.06.2022**

(51) International Patent Classification (IPC):
*H02P 29/028* (2016.01)   *B60L 9/18* (2006.01)
*B60L 15/00* (2006.01)   *B60L 15/02* (2006.01)
*B60L 15/20* (2006.01)   *B60L 3/10* (2006.01)
*H02P 27/08* (2006.01)

(52) Cooperative Patent Classification (CPC):
**H02P 27/08; B60L 3/102; B60L 3/106; B60L 9/18;
B60L 15/007; B60L 15/02; B60L 15/025;
B60L 15/009;** B60L 2200/26; B60L 2220/42;
B60L 2240/12; B60L 2240/421; B60L 2240/423;
B60L 2240/429; B60L 2240/465;          (Cont.)

(86) International application number:
**PCT/JP2022/025067**

(87) International publication number:
**WO 2023/008010 (02.02.2023 Gazette 2023/05)**

(54) **ELECTRIC MOTOR DRIVE DEVICE, AND ELECTRIC MOTOR DRIVE METHOD**

ELEKTROMOTORANTRIEBSVORRICHTUNG UND ELEKTROMOTORANTRIEBSVERFAHREN

DISPOSITIF D'ENTRAÎNEMENT DE MOTEUR ÉLECTRIQUE ET PROCÉDÉ D'ENTRAÎNEMENT DE
MOTEUR ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.07.2021  JP 2021126026**

(43) Date of publication of application:
**05.06.2024  Bulletin 2024/23**

(73) Proprietor: **Hitachi, Ltd.**
**Tokyo 100-8280 (JP)**

(72) Inventors:
• **HATSUSE, Wataru**
**Tokyo 100-8280 (JP)**

• **KUNIHIRO, Naoki**
**Tokyo 100-8280 (JP)**
• **KANAZAWA, Tomomi**
**Tokyo 100-8280 (JP)**

(74) Representative: **MERH-IP Matias Erny Reichl
Hoffmann
Patentanwälte PartG mbB
Paul-Heyse-Straße 29
80336 München (DE)**

(56) References cited:
**EP-B1- 2 843 826       JP-A- 2008 167 632
JP-A- 2008 167 632      JP-A- 2019 201 459
JP-A- 2019 201 459      JP-B2- 6 730 057
US-A1- 2005 189 886     US-B2- 10 038 396
US-B2- 8 988 016**

(52) Cooperative Patent Classification (CPC): (Cont.)
B60L 2240/526; B60L 2240/529; B60L 2260/42;
B60L 2270/145; H02P 29/028; Y02T 10/72

## Description

Technical Field

The present invention relates to a drive device and a drive method for driving an electric motor, and is particularly suitable as a drive device and a drive method for driving an electric motor mounted on a railway vehicle.

Background Art

A railway vehicle rotates wheels, which are drive wheels, by torque of a rotary electric machine, and accelerates the vehicle by a tangential force generated on the wheels as a reaction force that a wheel tread surface receives from a rail.
This tangential force varies depending on the tangential force coefficient $\mu$ representing the adhesion state between the wheels and the rails, and when the torque of the wheels becomes excessively larger than the tangential force, only the force for rotating the wheels increases while the force for accelerating the vehicle remains small. As a result, wheel slip or skidding of the wheels (hereinafter, also abbreviated as "wheel slip/skidding") occurs. In particular, when it rains or it snows, the coefficient of adhesion greatly decreases, so that wheel slip/skidding is likely to occur.
When such wheel slip/skidding occurs, re-adhesion control is performed in which the torque generated by the electric motor is reduced to control to a re-adhesion state smaller than the tangential force (for example, PTLs 1, 2, and 3). Furthermore, PTL 4 discloses a traction control system for electric vehicles, such as locomotives. The system according to PTL 4 addresses wheel slip by limiting the rate at which the excitation frequency of the motor can change. This rate limit is applied when the measured wheel creep exceeds a predefined threshold, with the goal of preventing excessive slip and improving stability. PTL 5 also discloses a traction control system for railway vehicles, wherein its method involves switching between two distinct control modes. That is, the system moves from a standard set of slip-detection thresholds to a second set after detecting that torque has been throttled frequently, indicating rather poor rail conditions. Furthermore, PTL 6 discloses a control method for an electric vehicle to prevent motor and inverter overheating when held stationary on an incline. To mitigate a current concentration state caused by a prolonged hill-hold, the system intentionally reduces motor torque to induce a slight rollback. This rotation shifts the concentrated current to a different motor phase, wherein the rate of this torque reduction is controlled based on the accelerator pedal position.

Citation List

Patent Literatures

    PTL 1: JP 2000-358302 A
    PTL 2: JP 2013-188009 A
    PTL 3: JP 2019-201459 A
    PTL 4: US 8 988 016 B2
    PTL 5: JP 6 730 057 B2
    PTL 6: JP 2008-167632 A

Summary of Invention

Technical Problem

PTLs 1, 2, and 3 describe techniques related to re-adhesion control, but the techniques described in PTLs 1 and 2 mainly aim at re-adhesion configuration such as improvement of adhesion utilization and setting of throttle torque, and do not mention the speed of torque reduction after wheel slip/skidding detection.
In addition, in the method described in PTL 3, a configuration in which the speed of torque reduction after the wheel slip/skidding detection is reduced with reference to the acceleration of the wheels is described, but the torque reduced speed is easily affected by noise of the rotation speed, and the use of a first order lag filter or the like causes a problem that the structure becomes complicated.
An object of the present invention is to provide an electric motor drive device and an electric motor drive method capable of appropriately changing a torque reduced speed after wheel slip/skidding detection with a simple configuration.

Solution to Problem

The invention is set out in the appended set of claims. Preferable embodiments are defined in the dependent claims.

Advantageous Effects of Invention

According to the present invention, since the torque command reduced speed is changed with reference to the torque command value, the torque command reduced speed is less susceptible to noise, and re-adhesion control can be performed with a simple configuration without using a first order lag filter or the like. In addition, by appropriately reducing the torque, it is possible to suppress rotational speed fluctuation at the time of wheel slip/skidding.

Problems, configurations, and effects other than those described above will become apparent by the following description of an embodiment.

Brief Description of Drawings

[FIG. 1] FIG. 1 is a block diagram illustrating an overall configuration of an electric motor drive device according to the present embodiment.

[FIG. 2] FIG. 2 is a diagram illustrating an outline of operation waveforms at the time of general wheel slip detection and re-adhesion control when wheel slip occurs.

[FIG. 3] FIG. 3 is a diagram illustrating a relationship between electric motor torque and a rotor frequency when wheel slip occurs.

[FIG. 4] FIG. 4 is a block diagram illustrating a configuration of a torque reduction calculating unit.

[FIG. 5] FIG. 5 is a diagram illustrating an outline of operation waveforms at the time of wheel slip detection and re-adhesion control when the torque reduction calculating unit is applied in a case in which the electric motor torque is a fixed value and a case in which the motor torque increases.

[FIG. 6] FIG. 6 is a block diagram illustrating a configuration of a torque reduction calculating unit in consideration of a skidding state.

[FIG. 7] FIG. 7 is a diagram illustrating an outline of operation waveforms at the time of skidding detection and re-adhesion control when the torque reduction calculating unit is applied in consideration of a skidding state in a case in which the electric motor torque increases in the negative direction.

[FIG. 8] FIG. 8 is a diagram illustrating a schematic configuration in a case where the electric motor drive device according to the present embodiment is applied to an electric motor for a railway vehicle.

Description of Embodiment

Hereinafter, an embodiment of the present invention will be described with reference to the drawings as a mode for carrying out the present invention. Note that the present invention is not limited by the embodiment. In the drawings, the same portions are denoted by the same reference numerals.

Embodiment

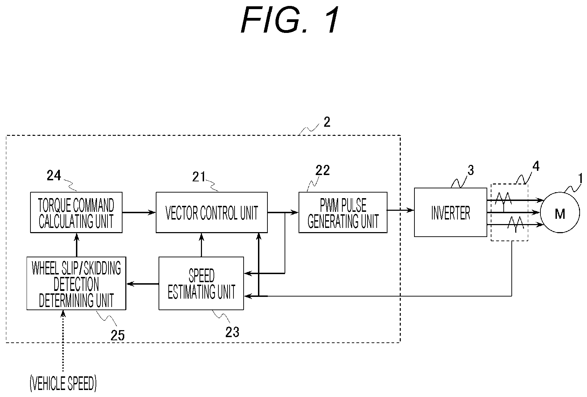

The embodiment of the present invention will be described with reference to FIGs. 1 to 8. The present embodiment is an example in which an electric motor mounted on a railway vehicle is driven by a drive device according to the present invention.

FIG. 1 is a block diagram illustrating an overall configuration of an electric motor drive device according to the present embodiment. As illustrated, the drive device according to the present embodiment includes a control device 2, an inverter 3, and a current detecting circuit 4, and drives an electric motor 1.

The control device 2 includes a vector control unit 21, a PWM pulse generating unit 22, a speed estimating unit 23, a torque command calculating unit 24, and a wheel slip/skidding detection determining unit 25, and performs drive control of the inverter 3.

In the control device 2, the vector control unit 21 calculates a voltage command value based on a torque command from the torque command calculating unit 24 and a current detected value from the current detecting circuit 4 that detects a current flowing through the electric motor 1. The PWM pulse generating unit 22 generates a PWM pulse signal on the basis of the voltage command value and supplies the PWM pulse signal to the inverter 3 as a drive signal. The inverter 3 generates an output voltage corresponding to the voltage command value and applies the output voltage to the electric motor 1. Here, the vector control unit 21 can be realized by using general vector control, and the control method is not particularly specified.

The wheel slip/skidding detection determining unit 25 receives rotation speed information of the electric motor 1 from the speed estimating unit 23, detects a wheel slip or skidding state, and outputs a wheel slip/skidding detection signal to the torque command calculating unit 24.

Here, the speed estimating unit 23 and the wheel slip/skidding detection determining unit 25 can be realized by a general speed estimation method and detection method, and the estimation method and detection method are not particularly specified.

In addition, the torque command calculating unit 24 performs re-adhesion control including torque reduction when the wheel slip or skidding state is detected on the basis of the wheel slip/skidding detection signal.

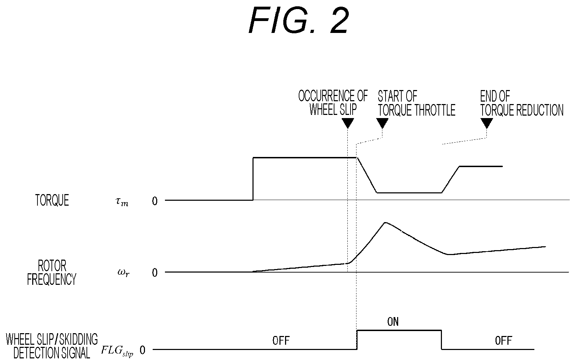

FIG. 2 is a diagram illustrating an outline of operation waveforms at the time of general wheel slip detection and re-adhesion control when wheel slip occurs.

In a case where the electric motor outputs torque and a rotor frequency increase, the wheel slip state in which the rotor frequency increases occurs when an adhesion coefficient decreases.

For example, when deviation between the frequency conversion value of the vehicle speed and the rotor frequency exceeds a certain threshold, the wheel slip/skidding detection determining unit 25 outputs the wheel slip/skidding detection signal to the torque command calculating unit 24. Therefore, the wheel slip/skidding detection determining unit 25 may take in the vehicle speed from the outside as indicated by a dotted line in FIG. 1.

Upon receiving the wheel slip/skidding detection signal, the torque command calculating unit 24 illustrated in FIG. 1 performs the re-adhesion control including torque reduction (in a period from start of torque throttle to end of torque reduction illustrated in FIG. 2).

According to the above operation mode, the enlargement of the wheel slip state is suppressed, and the rotational speed fluctuation and the vibration to the vehicle are reduced.

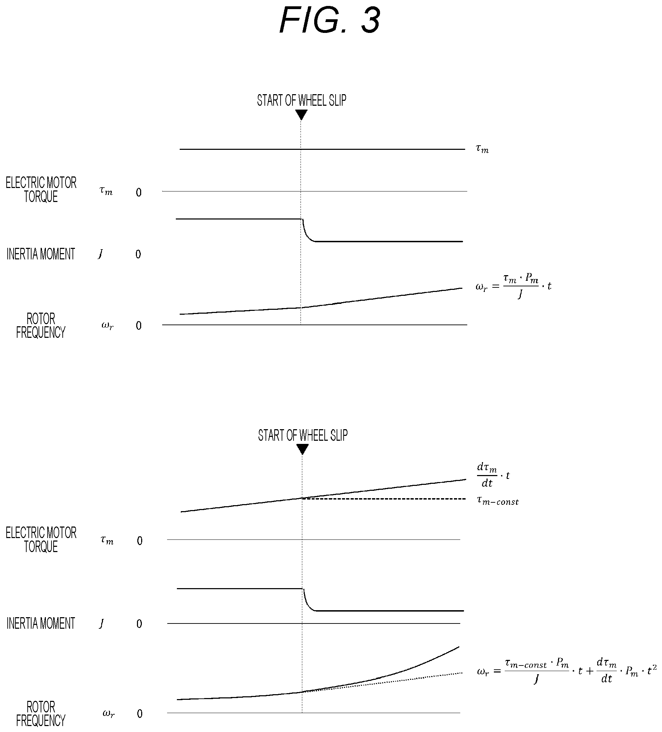

FIG. 3 is a diagram illustrating a relationship between the electric motor torque and the rotor frequency when wheel slip occurs. FIG. 3 illustrates characteristics of a rotor frequency $\omega_r$, electric motor torque $\tau_m$, and inertia moment J of the electric motor 1.

Here, $P_m$ is the number of pole pairs of the electric motor 1, and the inertia moment J is treated as equivalent inertia moment obtained by synthesizing a mass of the vehicle and the adhesion due to a tangential force coefficient $\mu$ in order to simplify the description.

In addition, the inertia moment J is large in a state where the wheel and the rail adhere to each other, and in a case where wheel slip/skidding occurs between the wheel and the rail, it is regarded that the inertia moment J appears to be small.

The rotor frequency $\omega_r$ of the electric motor 1 is expressed by the following formula (Formula 1).

[Formula 1]

$$J\frac{d\omega_r}{dt} = \tau_m \cdot P_m$$

The characteristic illustrated on the upper side of FIG. 3 is a case where the electric motor torque $\tau_m$ is a fixed value. For example, a case of constant speed traveling without notching is applicable.

When the wheel slip occurs in a state where the electric motor torque $\tau_m$ is a fixed value and the inertia moment J maintains a small value, the rotor frequency includes a primary component as expressed by the following formula (Formula 2), and increases at a constant inclination as illustrated in the upper side of FIG. 3. In other words, the rotor frequency increases at a constant acceleration.

[Formula 2]

$$\omega_r = \frac{\tau_m \cdot P_m}{J} \cdot t$$

On the other hand, the characteristic illustrated on the lower side of FIG. 3 is a case where the electric motor torque $\tau_m$ increases at a constant inclination. For example, cases of acceleration due to notching, initial startup, and restart are applicable.

In a case where the wheel slip occurs in a state where the electric motor torque $\tau_m$ increases at a constant inclination and the inertia moment J maintains a small value, the rotor frequency includes a primary component of fixed torque value $\tau_{m\text{-}const}$ at the start of wheel slip and a secondary component of torque gradient $d\tau_m/dt$ as expressed in the following formula (Formula 3), and increases secondarily as illustrated in the lower part of FIG. 3.

[Formula 3]

$$\omega_r = \frac{\tau_{\text{m-const}} \cdot P_m}{J} \cdot t + \frac{d\tau_m}{dt} \cdot P_m \cdot t^2$$

As shown in (Formula 3), when the inertia moment J becomes a small value due to rain or snowfall and wheel slip occurs, if the electric motor torque changes, the rotor frequency secondarily increases. In other words, the increase in the rotor frequency is steeper in this case than in the case where the electric motor torque is a fixed value, resulting in an increase in the rotational speed fluctuation at the time of wheel slip.

Further, when the fixed torque value $\tau_{\text{m-const}}$ at the start of wheel slip is large, the inclination of the primary component increases and the increase in the rotor frequency becomes steep.

As described above, in a case where the electric motor torque changes, as shown in (Formula 3), unless the primary component of the rotor rotational speed due to a magnitude of the electric motor torque at the time when the wheel slip/skidding detection occurs and the secondary component of the rotor rotational speed due to the change in the electric motor torque are considered together, the change in the rotor frequency cannot be appropriately evaluated.

In addition, when the secondary component of the rotor rotational speed is to be detected in order to appropriately evaluate the change in the rotor frequency, a differential configuration is easily affected by noise due to two-stage connection or the like, and the configuration becomes complicated.

On the other hand, the present invention proposes a configuration in which, when the electric motor torque command at the time of wheel slip/skidding detection is large or when the change in the electric motor torque command is large, it is determined that the rotor frequency quickly changes, and the torque command reduced speed is increased.

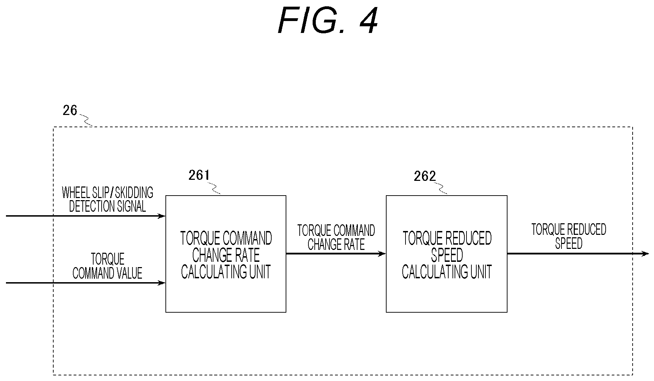

As a specific configuration, a torque reduction calculating unit is adopted. FIG. 4 is a block diagram illustrating a configuration of a torque reduction calculating unit 26.

The torque reduction calculating unit 26 is included in the torque command calculating unit 24 illustrated in FIG. 1 and includes a torque command change rate calculating unit 261 and a torque command reduced speed calculating unit 262. The torque command change rate calculating unit 261 determines a magnitude and inclination of the torque command value when the wheel slip or skidding is detected by the wheel slip/skidding detection signal, and calculates and outputs a torque command change rate. The torque command reduced speed calculating unit 262 calculates and outputs a torque command reduced speed based on the torque command change rate.

Here, the magnitude and the inclination of the torque command value can be easily obtained by referring to the value at the time of torque command generation.

In addition, the torque command reduced speed calculating unit 262 can set the torque command reduced speed by using a table or a function that outputs the torque command reduced speed with at least one of the magnitude and the inclination of the torque command value as a reference value.

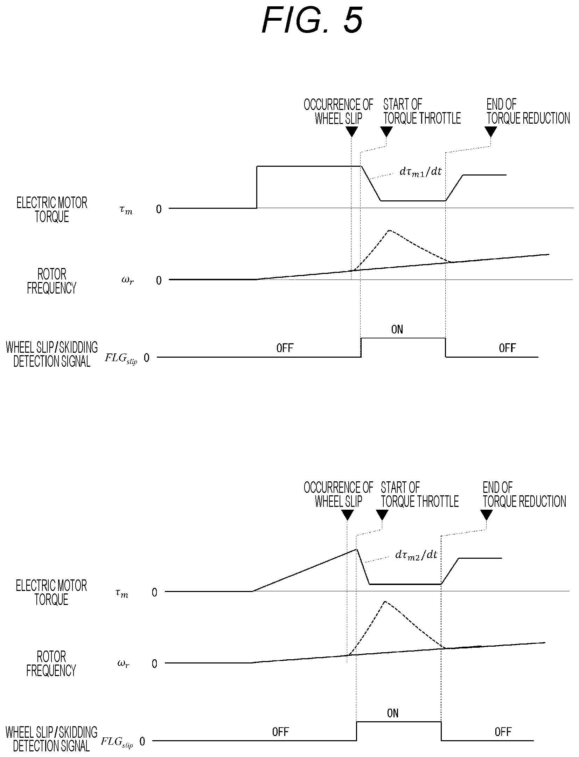

FIG. 5 is a diagram illustrating an outline of operation waveforms at the time of the wheel slip detection and the re-adhesion control when the torque reduction calculating unit 26 is applied in a case in which the electric motor torque is a fixed value (upper side in FIG. 5) and a case in which the electric motor torque increases (lower side in FIG. 5). If the torque is not throttled the rotor frequency fluctuates as indicated by a dotted line in FIG. 5.

By applying the torque reduction calculating unit 26, it is possible to suppress the fluctuation of the rotor frequency in both the case in which the electric motor torque is a fixed value and the case in which the electric motor torque increases.

Furthermore, by making the torque command reduced speed $d\tau_{m2}/dt$ in the case in which the electric motor torque increases illustrated on the lower side of FIG. 5 larger than the torque command reduced speed $d\tau_{m1}/dt$ in the case in which the electric motor torque is a fixed value illustrated on the upper side of FIG. 5, it is possible to suppress a larger fluctuation in the rotor frequency in the case where the electric motor torque increases.

However, since it is also assumed that the torque command reduced speed becoming excessively large can cause fluctuation in the rotor in the opposite direction, a predetermined upper limit value may be provided for the torque command reduced speed.

By adopting the torque reduction calculating unit 26 illustrated in FIG. 4 as described above, as illustrated in FIG. 5, it is possible to suppress the rotational speed fluctuation when wheel slip or skidding occurs and to perform smooth re-adhesion control.

On the other hand, in the skidding state, during the operation in which the electric motor torque increases in the negative direction, the rotation speed also increases in the negative direction. Therefore, the change rate of the torque command value is output as a negative value.

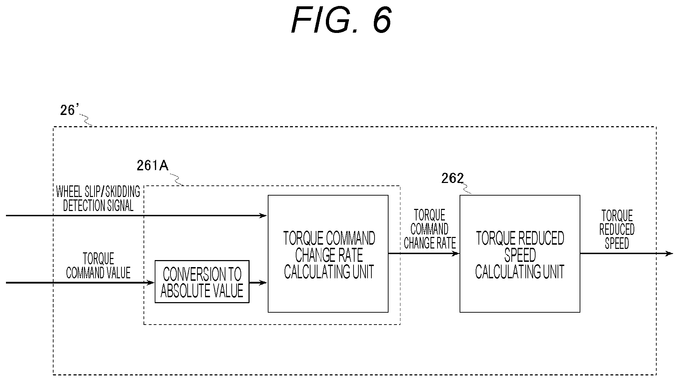

FIG. 6 is a block diagram illustrating a configuration of a torque reduction calculating unit 26' in consideration of the skidding state. The torque reduction calculating unit 26' is also included in the torque command calculating unit 24 illustrated in FIG. 1, and includes a torque command change rate calculating unit 261A and the torque command reduced speed calculating unit 262.

The torque command change rate calculating unit 261A illustrated in FIG. 6 has a different configuration from that of the torque command change rate calculating unit 261 illustrated in FIG. 4 in that a torque command value that is input is converted into an absolute value in order to use the same logical configuration in both of the wheel slip and the skidding. By converting the torque command value into an absolute value, the torque command reduced speed calculating unit 262 can be used without being changed.

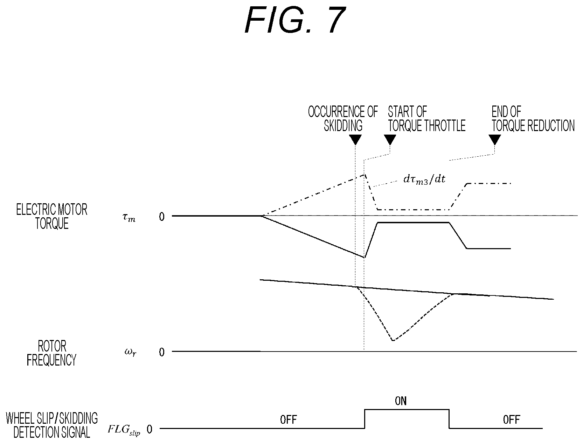

FIG. 7 is a diagram illustrating an outline of operation waveforms at the time of the skidding detection and the re-adhesion control when the torque reduction calculating unit 26' is applied in a case in which the electric motor torque increases in the negative direction.

As illustrated in FIG. 7, the torque command value obtained by converting the electric motor torque into an absolute value and indicated by a one-dot broken line is used to calculate the inclination of the torque command at the time of skidding detection (torque command change rate), and the torque command reduced speed calculating unit 262 outputs a torque command reduced speed $d\tau_{m3}/dt$.

This makes it possible to suppress fluctuation of the rotor frequency (the fluctuation indicated by a dotted line in FIG. 7 when throttle of torque is not performed).

As described above, by adopting the configuration illustrated in FIG. 6, the calculation of the torque command reduced speed in the wheel slip or the skidding can be constructed with a simple configuration.

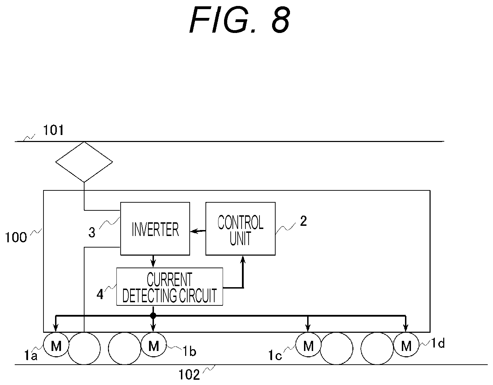

FIG. 8 is a diagram illustrating a schematic configuration in a case where the electric motor drive device according to the present embodiment is applied to an electric motor for a railway vehicle.

A railway vehicle 100 having an electric motor drive device according to the present embodiment (the control device 2, the inverter 3, and the current detecting circuit 4) receives supply of DC power from an overhead line 101, and travels along a rail 102 by wheels driven by the electric motor (for example, induction motors 1a to 1d).

By applying the electric motor drive device according to the present embodiment, it is possible to suppress the rotational speed fluctuation of the electric motor for the railway vehicle at the time of occurrence of the wheel slip or the skidding, and to perform smooth re-adhesion control.

An embodiment of the present invention has been described above.

Reference Signs List

1, 1a to 1d electric motor
2 control device
3 Inverter
4 current detecting circuit
21 vector control unit
22 PWM pulse generating unit
23 speed estimating unit
24 torque command calculating unit
25 wheel slip/skidding detection determining unit
26, 26' torque reduction calculating unit
100 railway vehicle
101 overhead line
102 rail
261, 261A torque command change rate calculating unit
262 torque command reduced speed calculating unit

**Claims**

1.   An electric motor drive device comprising:

an inverter (3) that drives an electric motor (1);
a current detecting circuit (4) that detects a current of the electric motor (1); and
a control device (2) that controls the inverter (3) based on a torque command value for the electric motor (1) and a current detected value from the current detecting circuit (4), wherein
the control device (2) changes a torque command reduced speed for the electric motor (1) based on a wheel slip/skidding detection signal that has detected occurrence of wheel slip or skidding of the electric motor (1) and a change rate of the torque command value, and throttles torque of the electric motor (1).

2. The electric motor drive device according to claim 1, wherein
the torque command reduced speed is set to a value equal to or lower than a predetermined upper limit value.

3. The electric motor drive device according to claim 1 or 2, wherein
the control device (2) uses, for setting of the torque command reduced speed, one of a table and a function, the table storing a relationship between the torque command reduced speed and the change rate of the torque command value, the function representing the relationship.

4. The electric motor drive device according to any one of claims 1, 2, and 3, wherein
a change rate of an absolute value of the torque command value is used as the change rate of the torque command value.

5. A railway vehicle comprising the electric motor drive device according to any one of claims 1, and 2 to 4.

6. An electric motor drive method comprising:

controlling an inverter (3) that drives an electric motor (1) based on a torque command value for the electric motor (1) and a current detected value of the electric motor (1); and
changing, when wheel slip or skidding occurs in the electric motor (1), a torque command reduced speed for the electric motor (1) based on a detection signal that has detected occurrence of the wheel slip or skidding and a change rate of the torque command value, and throttling torque of the electric motor (1).

7. The electric motor drive method according to claim 6, wherein
the torque command reduced speed is set to a value equal to or lower than a predetermined upper limit value.

8. The electric motor drive method according to claim 6 or 7, wherein
the torque command reduced speed is set using one of a table and a function, the table storing a relationship between the torque command reduced speed and the change rate of the torque command value, the function representing the relationship.

9. The electric motor drive method according to any one of claims 6, 7, and 8, wherein
a change rate of an absolute value of the torque command value is used as the change rate of the torque command value.

**Patentansprüche**

1. Elektromotor-Ansteuervorrichtung, die Folgendes umfasst:

einen Wechselrichter (3), der einen Elektromotor (1) ansteuert;
eine Stromdetektionsschaltung (4), die einen Strom des Elektromotors (1) detektiert; und
eine Steuervorrichtung (2), die den Wechselrichter (3) auf Basis eines Drehmomentbefehlswerts für den Elektromotor (1) und eines Stroms, der von der Stromdetektionsschaltung (4) detektiert wird, steuert, wobei die Steuervorrichtung (2) eine verringerte Drehmomentbefehls-Drehzahl für den Motor (1) auf Basis eines Radschlupf/Radrutsch-Detektionssignals, das das Auftreten von Radschlupf oder Radrutschen des Elektromotors (1) angibt, und einer Änderungsrate des Drehmomentbefehlswerts ändert und das Drehmoment des Elektromotors (1) drosselt.

2. Elektromotor-Ansteuervorrichtung nach Anspruch 1, wobei
die verringerte Drehmomentbefehls-Drehzahl auf einen Wert eingestellt wird, der kleiner oder gleich einem vorgegebenen oberen Grenzwert ist.

3. Elektromotor-Ansteuervorrichtung nach Anspruch 1 oder 2, wobei
die Steuervorrichtung (2) zum Einstellen der verringerten Drehmomentbefehls-Drehzahl entweder eine Tabelle oder eine Funktion verwendet, wobei die Tabelle eine Relation zwischen der verringerten Drehmomentbefehls-Drehzahl und der Änderungsrate des Drehmomentbefehlswerts speichert, wobei die Funktion die Relation darstellt.

4. Elektromotor-Ansteuervorrichtung nach einem der Ansprüche 1, 2 und 3, wobei

eine Änderungsrate eines Absolutwerts des Drehmomentbefehlswerts als die Änderungsrate des Drehmomentbefehlswerts verwendet wird.

5. Schienenfahrzeug, das die Elektromotor-Ansteuervorrichtung nach einem der Ansprüche 1 und 2 bis 4 umfasst.

6. Elektromotor-Ansteuerverfahren, das Folgendes umfasst:

Steuern eines Wechselrichters (3), der einen Elektromotor (1) ansteuert, auf Basis eines Drehmomentbefehlswerts für den Elektromotor (1) und eines Stromdetektionswerts des Elektromotors (1); und
dann, wenn Radschlupf oder Radrutschen im Elektromotor (1) auftritt, Ändern einer verringerten Drehmomentbefehls-Drehzahl für den Elektromotor (1) auf Basis eines Detektionssignals, das ein Auftreten des Radschlupfs oder des Radrutschens angibt, und einer Änderungsrate des Drehmomentbefehlswerts und Drosseln des Drehmoments des Elektromotors (1).

7. Elektromotor-Ansteuerverfahren nach Anspruch 6, wobei
die verringerte Drehmomentbefehls-Drehzahl auf einen Wert eingestellt wird, der kleiner oder gleich einem vorgegebenen oberen Grenzwert ist.

8. Elektromotor-Ansteuerverfahren nach Anspruch 6 oder 7, wobei
die verringerte Drehmomentbefehls-Drehzahl unter Verwendung entweder einer Tabelle oder einer Funktion eingestellt wird, wobei die Tabelle eine Relation zwischen der verringerten Drehmomentbefehls-Drehzahl und der Änderungsrate des Drehmomentbefehlswerts speichert, wobei die Funktion die Relation darstellt.

9. Elektromotor-Ansteuerverfahren nach einem der Ansprüche 6, 7 und 8, wobei
eine Änderungsrate eines Absolutwerts des Drehmomentbefehlswerts als die Änderungsrate des Drehmomentbefehlswerts verwendet wird.

## Revendications

1. Dispositif d'entraînement de moteur électrique comprenant :

un onduleur (3) qui entraîne un moteur électrique (1) ;
un circuit de détection de courant (4) qui détecte un courant du moteur électrique (1) ; et
un dispositif de commande (2) qui commande l'onduleur (3) sur la base d'une valeur d'ordre de couple pour le moteur électrique (1) et d'une valeur détectée de courant provenant du circuit de détection de courant (4), dans lequel
le dispositif de commande (2) change une vitesse réduite d'ordre de couple pour le moteur électrique (1) sur la base d'un signal de détection de glissement/patinage de roue qui a détecté une occurrence de glissement ou patinage de roue du moteur électrique (1) et un taux de changement de la valeur d'ordre de couple, et limite un couple du moteur électrique (1).

2. Dispositif d'entraînement de moteur électrique selon la revendication 1, dans lequel
la vitesse réduite d'ordre de couple est fixée à une valeur égale ou inférieure à une valeur limite supérieure prédéterminée.

3. Dispositif d'entraînement de moteur électrique selon la revendication 1 ou 2, dans lequel
le dispositif de commande (2) utilise, pour fixer la vitesse réduite d'ordre de couple, une table ou une fonction, la table stockant une relation entre la vitesse réduite d'ordre de couple et le taux de changement de la valeur d'ordre de couple, la fonction représentant la relation.

4. Dispositif d'entraînement de moteur électrique selon l'une quelconque des revendications 1, 2, et 3, dans lequel
un taux de changement d'une valeur absolue de la valeur d'ordre de couple est utilisé à titre de taux de changement de la valeur d'ordre de couple.

5. Véhicule ferroviaire comprenant le dispositif d'entraînement de moteur électrique selon l'une quelconque des revendications 1, et 2 à 4.

6. Procédé d'entraînement de moteur électrique comprenant les étapes consistant à :

   commander un onduleur (3) qui entraîne un moteur électrique (1) sur la base d'une valeur d'ordre de couple pour le moteur électrique (1) et d'une valeur détectée de courant du moteur électrique (1) ; et
   changer, quand un glissement ou un patinage de roue se produit dans le moteur électrique (1), une vitesse réduite d'ordre de couple pour le moteur électrique (1) sur la base d'un signal de détection qui a détecté une occurrence du glissement ou patinage de roue et un taux de changement de la valeur d'ordre de couple, et un couple de limitation du moteur électrique (1).

7. Procédé d'entraînement de moteur électrique selon la revendication 6, dans lequel
   la vitesse réduite d'ordre de couple est fixée à une valeur égale ou inférieure à une valeur limite supérieure prédéterminée.

8. Procédé d'entraînement de moteur électrique selon la revendication 6 ou 7, dans lequel
   la vitesse réduite d'ordre de couple est fixée à l'aide d'une table ou d'une fonction, la table stockant une relation entre la vitesse réduite d'ordre de couple et le taux de changement de la valeur d'ordre de couple, la fonction représentant la relation.

9. Procédé d'entraînement de moteur électrique selon l'une quelconque des revendications 6, 7 et 8, dans lequel
   un taux de changement d'une valeur absolue de la valeur d'ordre de couple est utilisé à titre de taux de changement de la valeur d'ordre de couple.

# FIG. 1

# FIG. 2

# FIG. 3

# FIG. 4

EP 4 380 039 B1

FIG. 5

# FIG. 6

26'

261A

WHEEL SLIP/SKIDDING
DETECTION SIGNAL

TORQUE
COMMAND VALUE → CONVERSION TO
ABSOLUTE VALUE → TORQUE COMMAND
CHANGE RATE
CALCULATING UNIT → TORQUE
COMMAND
CHANGE RATE

262

TORQUE REDUCED
SPEED
CALCULATING UNIT → TORQUE
REDUCED
SPEED

# FIG. 7

OCCURRENCE OF SKIDDING

START OF TORQUE THROTTLE

END OF TORQUE REDUCTION

ELECTRIC MOTOR TORQUE $\quad \tau_m \quad$ 0

$d\tau_{m3}/dt$

ROTOR FREQUENCY $\quad \omega_r \quad$ 0

WHEEL SLIP/SKIDDING DETECTION SIGNAL $\quad FLG_{slip} \quad$ 0

OFF

ON

OFF

# FIG. 8

**EP 4 380 039 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000358302 A
- JP 2013188009 A
- JP 2019201459 A
- US 8988016 B2
- JP 6730057 B
- JP 2008167632 A